Europäisches Patentamt

European Patent Office

Office européen des brevets

(11) Publication number: **0 307 397**
**B1**

(12) EUROPEAN PATENT SPECIFICATION

(45) Date of publication of patent specification: **16.01.91**

(51) Int. Cl.5: **B 63 B 35/32, E 02 B 15/04**

(21) Application number: **87902523.7**

(22) Date of filing: **21.04.87**

(86) International application number:
**PCT/FI87/00050**

(87) International publication number:
**WO 87/06556 05.11.87 Gazette 87/24**

(54) APPARATUS AND METHOD FOR COLLECTING OIL FROM WATER.

(30) Priority: **24.04.86 FI 861719**

(43) Date of publication of application:
**22.03.89 Bulletin 89/12**

(45) Publication of the grant of the patent:
**16.01.91 Bulletin 91/03**

(84) Designated Contracting States:
**AT BE DE FR GB IT LU NL SE**

(56) References cited:
**WO-A-85/05644**
**GB-A-1 334 927**
**NO-B- 127 932**
**NO-B- 134 167**
**SE-B- 346 346**
**US-A-3 536 199**

(73) Proprietor: **OIL GATE OY**
**Tuulimyllyntie 6**
**SF-00920 Helsinki (FI)**

(72) Inventor: **Tarvainen,Teuvo Raine**
**Karhutie 20 A 1**
**SF-00800 Helsinki (FI)**
Inventor: **Junttola,Jorma Pekka Juhani**
**Vanha Nurmijarventie 190**
**SF-01750 Vantaa (FI)**

(74) Representative: **Wibom, Hans Sven Erik et al**
**Dr. Ludwig Brann Patentbyra AB P.O. Box 17192**
**S-104 62 Stockholm (SE)**

Courier Press, Leamington Spa, England.

## Description

The present invention relates to a method for gathering oil and to an apparatus which uses the said method.

The growing consumption of oil has considerably increased the hazards and possibilities of damage, caused by oil entering water in one way or another. In addition to the actual risk factors posed by the transportation of oil, there is also the problem of leakage from the fuel tanks of ships. This problem has grown in importance as the increasing size of ships has lead to larger fuel tanks. There have been many environmental disasters during the last decade, directly resulting from oil having leaked into the water, for example in countries with sea coasts. It is for this reason understandable that many methods have been developed for preventing damage caused by oil. As examples of such methods, the use of booms preventing the oil from spreading, decomposition of the oil by chemicals and absorption of the oil by such materials as peat and glass wool, can be mentioned, (see GB—A—1334927, US—A—3536199).

The object of this invention is to remove the oil which has leaked into the water and is floating on the surface thereof, by exploiting for this purpose changes in the physical properties of the oil, in particular changes in the surface tension and viscosity, these said changes being caused by changes in the temperature, especially by a decrease in temperature.

The characteristic features of the invention are given in the claims appended. Thus the method according to the invention is characterized in that the method for collecting oil uses a member with a smooth surface rotating in the water, the temperature of the said member being maintained lower than the temperature of the water.

It is characteristic for the apparatus according to the invention that a rotating member with smooth surface is connected to a cooling unit which surface is arranged to be maintained at a temperature lower than the temperature of the surrounding water for oil collection.

The invention thus exploits the well known property of liquids, that is when the temperature decreases, the surface tension and especially the viscosity of a liquid, increase. Thus for example oils adhere firmly and effectively to a cold surface.

Below the invention is described in more detail by referring to the figures included, where

Figure 1 is an overall diagram of an advantageous arrangement according to the invention.

Figure 2 is a side view of one cylinder-like member according to the invention, and

Figure 3 shows a cross section of a member according to figure 2, in operation.

Below the invention is described by referring to the figures appended and by explaining their operation principle.

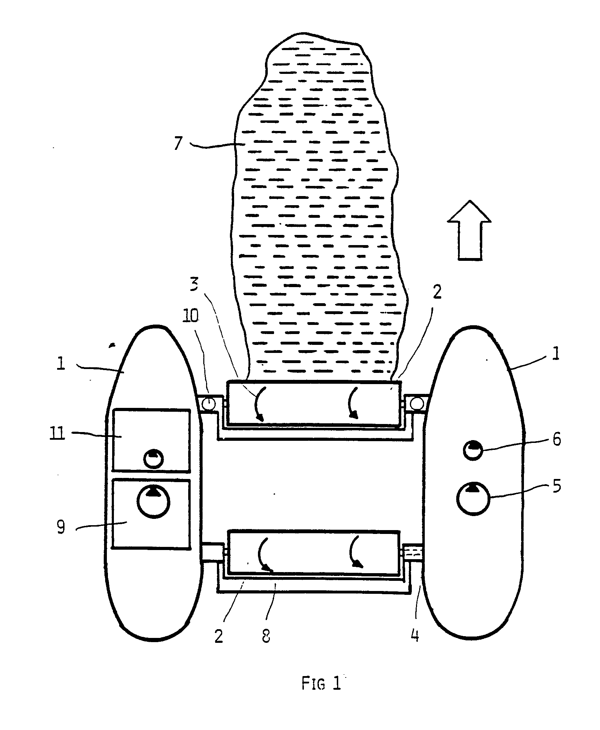

The collecting equiment according to figure 1 consists suitably of a two-sided vessel 1, between which are arranged suitably two horizontal cylinders 2, which rotate in the direction shown by the arrow so, that the speed of the circumference of the cylinders is mechanically selectable. The cylinders 2 are connected by tubing 4 to a cooling unit 5, which provides cooling liquid 13, which is pumped into the cylinder 2 by pump 6.

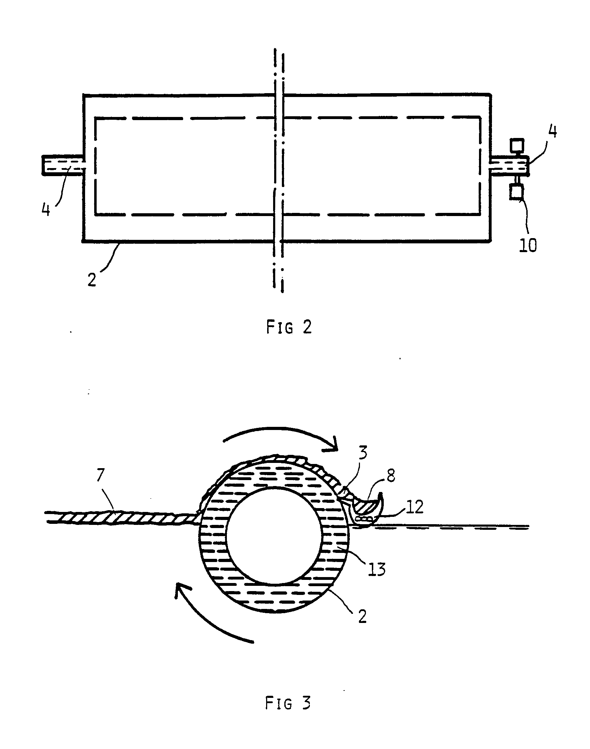

Figure 3 shows, that when the cylinder 2 comes into contact with the oil 7 floating on the surface, the oil hits the surface of the cylinder 2 and congeals due to the low surface temperature of the cylinder. The congealed oil then adheres to the surface of the cylinder. Due to the rotation of the cylinder the oil is transported on the surface of cylinder 2 to fixed blades 3, which remove the oil from the cylinders 2, and the oil passes through the collecting gutter 8 into the collecting tank 9.

The lifting equipment 10 shown in figure 2 is able to move the cyinders 2 vertically so that an optimum operation depth, depending on the thickness of the oil layer, is obtained.

In vessel 1, there are ballast tanks 11, which can be advantageously filled with water, from which the amount of water compensating in mass the collected amount of oil, can be pumped out of the vessel. In this way it can be ensured, that the collecting cylinder is always at a suitable height in relation to the surface of the oil.

On the bottom of the collecting gutter 8, there is suitably a heating tubing 12, which heats the gutter so that the oil flows gravitationally into the collecting tank 9. Thermal energy for the heating tubing 12 and even for the vessel itself is obtained from the heat of condensation from the cooling unit 5. The dimensioning of the vessels themselves and of the cylinders and of the cooling unit is freely selectable according to the conditions.

## Claims

1. A method for collecting oil, which has got into water, from the surface of the water, characterized in that the method for collecting oil (7) uses a member (2) with a smooth surface rotating in the water, the temperature of the said member being maintained lower than the temperature of the water.

2. A method according to claim 1, wherein said member used for oil collecting is a cylinder (2) rotating in the water.

3. A method according to claim 1, wherein said member used for oil collecting is an endless belt or band going around in the water.

4. An apparatus for collecting the oil, which has entered the water, from the surface of the water, characterized in that it has a rotating collecting member (2) with a smooth surface which is connected to a cooling unit (5) so that the surface temperature of said member is maintained lower than the temperature of the surrounding water for collecting the oil (7).

5. An apparatus according to claim 4, characterized in that said collecting member with a smooth surface is a cylinder (2) rotating in the water.

6. An apparatus according to claim 4, characterized in that said collecting member with a smooth surface is an endless belt going around in the water.

7. An apparatus according to claims 4—6, characterized in that the height of said collecting member (2) can be adjusted by means of separate lifting equipment (10) to a height suitable for oil collecting.

8. An apparatus according to claims 4—6, characterized in that the height of the apparatus, installed by connection to an oil collecting vessel, can be adjusted in relation to the water surface, by means of ballast tanks in said vessel.

## Patentansprüche

1. Verfahren zum Sammeln von in Wasser gelangtem Öl von der Wasseroberfläche, dadurch gekennzeichnet, daß das Verfharen zum Sammeln von Öl (7) ein Element (2) mit einer glatten Overflächen, das im Waser rotiert, verwendet, wobei die Temperatur des Elements niedriger gehalten wird als die Temperatur des Wassers.

2. Verfahren nach Anspruch 1, wobei das für das Sammeln von Öl verwendete Element ein im Wasser rotierender Zylinder (2) ist.

3. Verfahren nach Anspruch 1, in dem das für das Sammeln von Öl verwendete Element ein endloser, im Wasser umlaufender Riemen oder Band ist.

4. Vorrichtung zum Sammeln von in Wasser gelangtem Öl von der Wasseroberfläche, dadurch gekennzeichnet, daß sie ein rotierendes sammelndes Element (2) mit einer glatten Oberfläche aufweist, die mit einer Kühleinheit (5) verbunden ist, so daß zum Sammeln des Öls (7) die Oberflächentemperatur des Elements niedriger als die Temperatur des umgebenden Wassers gehalten wird.

5. Vorrichtung nach Anspruch 4, dadurch gekennzeichnet, daß das sammelnde Element mit einer glatten Oberfläche ein im Wasser rotierender Zylinder (2) ist.

6. Vorrichtung nach Anspruch 4, dadurch gekennzeichnet, daß das sammelnde Element mit einer glatten Oberfläche ein im Wasser umlaufender endloser Riemen ist.

7. Vorrichtung nach einem der Ansprüche 4 bis 6, dadurch gekennzeichnet, daß die Höhe des sammelnden Elements (2) mittels getrennter Hubeinrichtung (10) auf eine für das Sammeln des Öls passende Höhe eingestellt werden kann.

8. Vorrichtung nach einem der Ansprüche 4 bis 6, dadurch gekennzeichnet, daß die Höhe der Vorrichtung, die in Verbindung mit einem Öl sammelnden Wasserfahrzeug angeordnet ist, in Beziehung zur Wasseroberfläche mittels Ballasttanks im Wasserfahrzeug eingestellt werden kann.

## Revendications

1. Procédé pour recueillir du pétrole qui s'est introduit dans l'eau, de la surface de l'eau, caractérisé en ce que le procédé pour recueillir le pétrole (7) emploie un organe (2) avec une surface lisse tournant dans l'eau, la température dudit organe étant maintenue plus basse que la température de l'eau.

2. Procédé selon la revendication 1, où ledit organe utilisé pour recueillir le pétrole est un cylindre (2) tournant dans l'eau.

3. Procédé selon la revendication 1, où ledit organe utilisé pour recueillir le pétrole est une courroie ou bande sans fin qui tourne dans l'eau.

4. Appareil pour recueillir du pétrole qui est entré dans l'eau, de la surface de l'eau, caractérisé en ce qu'il a un organe collecteur rotatif (2) avec une surface lisse, qui est relié à une unité de refroidissement (5) de manière que la température de surface dudit organe soit maintenue plus basse que la température de l'eau qui l'entoure pour recueillir l'huile (7).

5. Appareil selon la revendication 4, caractérisé en ce que ledit organe collecteur ayant une surface lisse est un cylindre (2) tournant dans l'eau.

6. Appareil selon la revendication 4, caractérisé en ce que ledit organe collecteur ayant une surface lisse est une courroie sans fin tournant dans l'eau.

7. Appareil selon les revendications 4 à 6, caractérisé en ce que la hauteur dudit organe collecteur (2) peut être ajustée au moyen d'un équipement élévateur séparé (10) à une hauteur appropriée pour recueillir le pétrole.

8. Appareil selon les revendications 4 à 6, caractérisé en ce que la hauteur de l'appareil, installé par connexion à un récipient collecteur de pétrole, peut être ajustée relativement à la surface de l'eau au moyen de réservoirs de lest dans ledit récipient.

FIG 1

FIG 2

FIG 3